# EUROPEAN PATENT APPLICATION

(11) **EP 3 170 435 A1**
(43) Date of publication of application: **24.05.2017**
(21) Application number: 16200360.2
(22) Date of filing: 23.11.2016
(51) Int. Cl.: A47J 43/07

(54) **MIXING BOWL**

(30) Priority: 23.11.2015 GB 201520661
(71) Applicant: Kenwood Limited, Havant, Hampshire PO9 2NH (GB)
(72) Inventor: Palmer, Paul, Havant, Hampshire PO9 2NH (GB); Sealy, James, Havant, Hampshire PO9 2NH (GB)
(74) Representative: Hector, Annabel Mary

(57) **Abstract**

A mixing bowl 100 comprising a base 101, and a sidewall upstanding from the base, wherein the sidewall comprises a rigid side-wall section 103 and an elastically-deformable side-wall section 104 at least a portion of which is deformable to form a spout for pouring contents out of or into the bowl.

## Description

This invention relates to mixing bowls. Typically a mixing bowl is used in a kitchen, laboratory, or other situation where mixing of ingredients is desirable, for thoroughly mixing ingredients in using either a hand-tool or a machine such as a hand-mixer, hand-blender, or stand mixer. In use with kitchen machines with integral heating elements they may also be used to heat and cook ingredients whilst a machine-driven tool ensures even temperature and consistency through thorough mixing.

Where the resulting mixed product is in a liquid, semi-liquid, or otherwise viscous state it is desirable to be able to pour out the resulting mixed product into another container for further processing - for example into a mould to be set or baked, or into bowls to be consumed. However, pouring from a bowl is difficult, especially where the receptacle which material is being poured into is smaller than the bowl, as when tipped at a substantial angle material will tend to flow across most of the entire width of one side of the bowl.

To facilitate the above-described pouring, some bowls feature a rigid rim in which a spout is formed which can be used to direct the flow of the substance being poured and limit the width across which material flows.

However, the spout formed in this rigid lip cannot extend too far from the rigid lip without impairing the ease of storage of the bowl, and cannot have an upper lip below that of the rigid rim to further facilitate pouring without reducing the bowl's holding capacity. Furthermore, such a spout is preferably formed of a plastic material to aid ease of manufacture, whilst the bowl itself should preferably be made of a heat-resistant, induction-heatable material to aid heating, and combining two different materials in a bowl often leads to weakness and food-traps being created at the joining point between the two materials.

Furthermore when using a kitchen machine such as a stand mixer, it may be desirable to add ingredients to a bowl whilst the machine is operating. This is difficult to do because the bowl because the machine tends to obstruct access to the open top of the bowl.

It is therefore desirable to provide a mixing bowl which aims to alleviate the above-discussed problems.

According to a first aspect of the invention there is provided a mixing bowl comprising a base, and a sidewall upstanding from the base, wherein the sidewall comprises a rigid side-wall section and an elastically-deformable side-wall section at an upper edge thereof which is deformable to form a spout for pouring contents into or out of the bowl.

Thus the deformable section may form a continuous bowl surface when the bowl is being used for example to mix the contents, and may then be manipulated when required such that the deformable section forms a spout.

Preferably, the rigid side-wall section defines at least one cutout in an upper edge, and the elastically-deformable side-wall section is located in the at least one cutout; for example substantially "V" or "U" shaped.

Alternatively, the elastically-deformable side-wall section is located upstanding from the rigid side-wall section, and may extend around the periphery of the bowl.

The elastically-deformable side-wall section may comprise a hard section, and a soft section of lower Shore A hardness than the hard section, wherein the soft section is deformable to form the spout. Preferably, the hard section and the soft section are integrally formed.

For example, the hard section may have a hardness of Shore A hardness 40 or more, and the soft section may have a hardness of Shore A hardness 20 or less.

Thus a spout may be formed by a user pressing the sides of the bowl towards each other, causing the softer section to deform outwardly.

Preferably, the mixing bowl further comprises at least one handle connected by one or more connections to the rigid side-wall section.

Preferably, the at least one handle is of sufficient length to reach the same vertical height above the base as the sidewall, so as to be level with the top of the bowl.

The one or more connections may be hinged connections allowing the at least one handle to be moved from a first position abutting the sidewall to a second position protruding outwardly from the sidewall, and the elastically-deformable side-wall section may be stretchable to attach to the at least one handle when it is in the second position.

Preferably, the hinged connections are lockable in the second position.

Preferably, the hinged connections are spring-loaded so as to bias the handle towards the first position.

Preferably, the elastically deformable side-wall section further comprises a hook-shaped rim along an upper edge, for example having a hardness of Shore A 100 or more.

Preferably, the mixing bowl further comprises a rigid frame which the hook-shaped rim is removably attachable to, which may be configured to form a section of the hook-shaped rim into a spout-shape when the hook-shaped rim is attached to the rigid frame.

Preferably, the rigid frame is of larger diameter than the hook-shaped rim.

Preferably, the base further comprises locking elements for allowing the bowl to be removably attached to a stand mixer, kitchen machine, or other kitchen device.

The base and/or the rigid side-wall section may further comprise heating elements for heating contents of the mixing bowl which can derive electrical power from a kitchen device that the base is attached to.

Alternatively or in addition, the base and/or the rigid side-wall section further comprise heat sensors for sensing the heat of contents of the mixing bowl which can derive electrical power from a kitchen device that the base is attached to, and transmit data to the kitchen device.

Preferably, the rigid side-wall section forms a lip protruding outwardly from the bowl along an upper edge to create a gap along an inner surface of the upper edge, and the elastically-deformable side- wall section is bonded onto the inner surface of the lip, wherein the gap is of substantially the same thickness as the elastically deformable sidewall bonded to the inner surface.

Thus the inner surface of the bowl may be substantially continuous.

Preferably, the elastically deformable side-wall section is further bonded to an outer surface of the rigid side-wall section below the lip.

Preferably, the elastically-deformable side-wall section is removably attached to the rigid-sidewall section by a water-proof locking element, for example a zip-lock.

Preferably, the base and/or rigid side-wall is made of a metallic, induction-heatable material such as stainless steel.

Preferably, the elastically deformable side-wall section is made of silicone. Preferably, the base and rigid side-wall section are integrally formed.

Preferably, the elastically-deformable side-wall section further comprises one or more substantially vertical strengthening elements such as integral ribs or embedded wires.

In another aspect of the invention, there is provided a kitchen device incorporating the mixing bowl herein described.

Preferably the kitchen device is a stand mixer.

Further features of the invention are characterised by the dependent claims. Aspects of the invention may provide one, some or all of the following, in any appropriate combination.

The invention extends to methods and/or apparatus substantially as herein described with reference to the accompanying drawings.

Any feature in one aspect of the invention may be applied to other aspects of the invention, in any appropriate combination.

Embodiments of the invention will now be discussed with reference to the drawings, in which:
Figure 1 shows a perspective view of a mixing bowl according to a first embodiment,
Figure 2 shows a side-on cutaway view through a bowl according to second embodiment,
Figure 3 shows a detail of a cutaway view through section BB,
Figure 4 shows a side-on cutaway view of a bowl according to a third embodiment,
Figure 5 shows a perspective view of a bowl according to a fourth embodiment, and
Figure 6 shows a detail of a cutaway view through section AA.

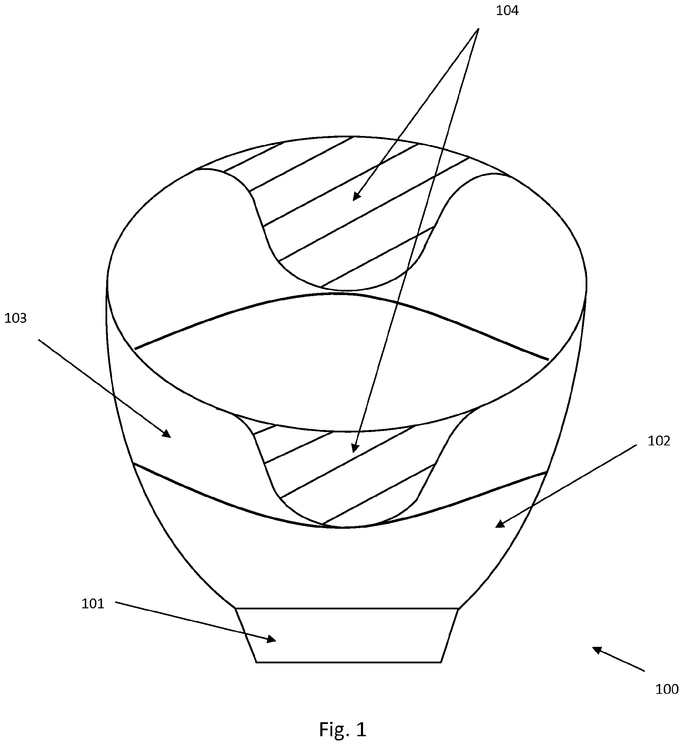

Referring firstly to Figure 1, a generally hollow-hemispherical bowl 100 comprising a base 101, a lower section 102, an upper section 103, and deformable spout sections 104 is shown.

The base 101 is made of a metallic, induction-heatable material such as stainless steel, and has a flat bottom to allow the bowl to be placed stably on a flat surface. Locking elements (not shown) are formed on the bottom of the base 101 to allow it to be removably attached to a stand mixer. The base 100 also includes heating elements and sensors that derive power from and communicate data with a stand mixer when attached to it, either via a wired connection or via a wireless communications method such as near field communication (NFC).

The lower section 102 consists of a continuous side-wall upstanding from the base, and co-operates with the base 101 to contain liquids placed in the bowl 100. The lower section 102 is also made of a metallic, durable, induction-heatable material such as stainless steel. The base 101 and the lower section 102 are preferably integrally formed, or welded together.

The lower section 102 can be modified to include a heating element such as a thick film heater applied to an internal surface, as well as sensors for controlling heating. In this case the heater derives power from a stand mixer to which the base 101 is connected, or via a wired connection. To avoid burning, the heating element of the lower section 102 is preferably not provided in the vicinity of the upper section 103.

The upper section 103 is formed as a side-wall upstanding from the lower section 102.

The upper section 103 is preferably formed of a plastic material such as silicone, and preferably has a firm consistency (for example, a Shore A hardness of around 40 or more) to maintain the rounded shape of the bowl whilst still permitting a degree of elastic deformation.

The upper section 103 defines "U" or "V" shaped cut-outs in which deformable spout sections 104 are formed, these shapes being particularly conducive to the shaping of a spout. Whilst two cut-outs and deformable spout sections 104 are shown here for the purposes of example, any number may be formed.

The deformable spout sections 104 are preferably formed of a plastic material such as silicone with a less firm consistency than that of the upper section 103 (for example, a Shore A hardness of around 20 or less). In this way, when pressure is applied to sides of the upper section 103, deformation will first occur at the deformable spout sections 104, which will form a spout-shape to facilitate pouring. Once the pressure is removed the spout sections 104 resiliently return to their previous shape.

The deformable spout sections 104 are integrally formed with the upper section 103 by, for example, varying the thickness of an injection-moulded component during ejection moulding so that it is thinner in the deformable spout sections 104 and thicker in upper section 103. This facilitates the slight deformation of upper section 103 when spout sections 104 are deformed, putting less strain on the join between the two components. Alternatively, the spout sections 104 are separately formed and glued or bonded into place, or removable attached by tabs or other locking elements (e.g., a zip-lock-type join) to the upper section 103 to form a water-tight seal.

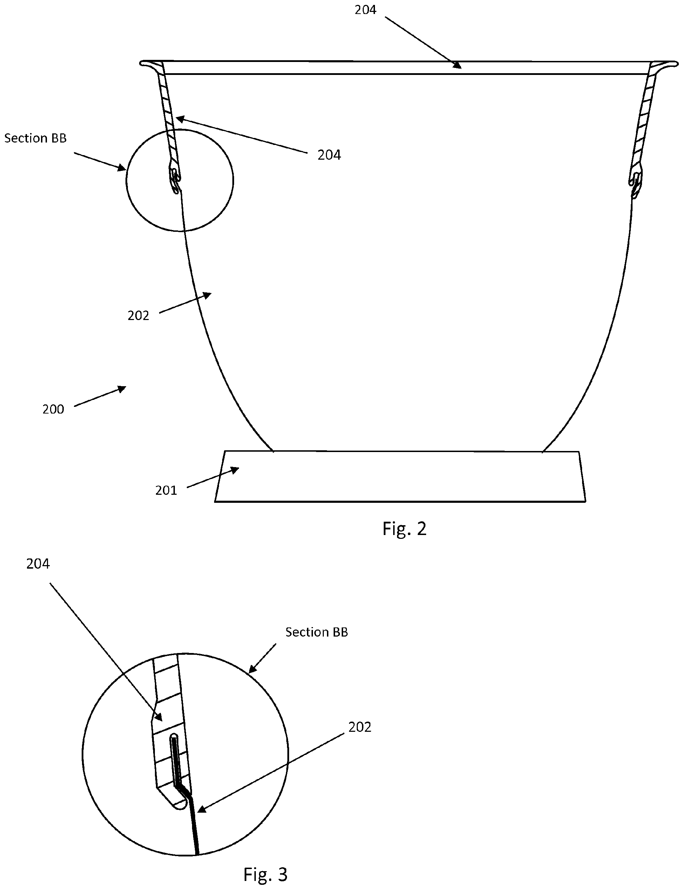

A second embodiment shown in Figure 2 includes a mixing bowl 200 having a base 201, a lower section 202, an upper section 203, and a rim 204. This embodiment is identical to the first embodiment except that the rim 204, which is folded over to form a hook-like shape in cross-section, is formed at the top of the upper section 203 and along the top of any deformable spout sections (not shown) formed in the upper section 203.

The hook-like shape of the rim 204 allows it to be hooked over a frame (not shown) made of metal (or another rigid material) to conform to the shape of the metal frame. For example, the metal frame can be general circular but have a triangular-shaped section (or other shape suitable for forming a spout) along part of its circumference extending outwardly, meaning that when the rim 204 is hooked over the metal frame, an outwardly-extending triangular spout-shape is formed along a section of the rim 204.

The metal frame can be provided separately and attached by the user when they wish to perform pouring, or attached to the lower section 202. The metal frame can also be modified to have a diameter greater than the rim 204 when in an untensioned state, thus allowing the capacity of the bowl to be increased when the rim 204 is hooked over the frame by stretching it along its entire length so as to widen the opening of the bowl 200.

The rim 204 is preferably made of 100 Shore A silicone, whereas the upper section 203 is made of 40 Shore A silicone, with the rim 204 and the upper section 203 formed of material of their respective Shore hardnesses silicones bonded together in one mould. This allows the top rim 204 to maintain a hook-type shape, and not change its hook-type shape when stretched over the frame. Alternatively, ribs or support elements can be formed in the rim 204 to hold its hook-like shape, with the rim 204 being integrally formed with the upper section 203.

Figure 3 shows a detail of Figure 2 taken through the line BB showing the join between the metal lower section 202 and the silicone upper section 203. The lower section 202 forms an outwardly- extending flange-shaped lip along its upper edge, which the upper section 203 is bonded to and moulded over along both its inner and outer surfaces.

Since the lower section 202 extends outwardly to form a gap to accommodate the thickness of the upper section 203 at the point where the upper section 203 is moulded over the lower section 202, the join does not result in the upper section 203 protruding into the bowl 200. A flat, continuous internal surface is thus formed along the inside of the bowl 200, avoiding the formation of food- traps or protrusions that might interfere with the operation of mixing tools.

Additionally, the over-moulding of the upper section 203 on the outer surface of the lower section 202 reaches beneath the outwardly extending flange-shaped lip resulting in a firm connection which resists upward separation of the upper section 203 from the lower section 202. This bonding arrangement is preferably used anywhere flexible material (e.g., silicone) is bonded with inflexible material (e.g., stainless steel) in this invention.

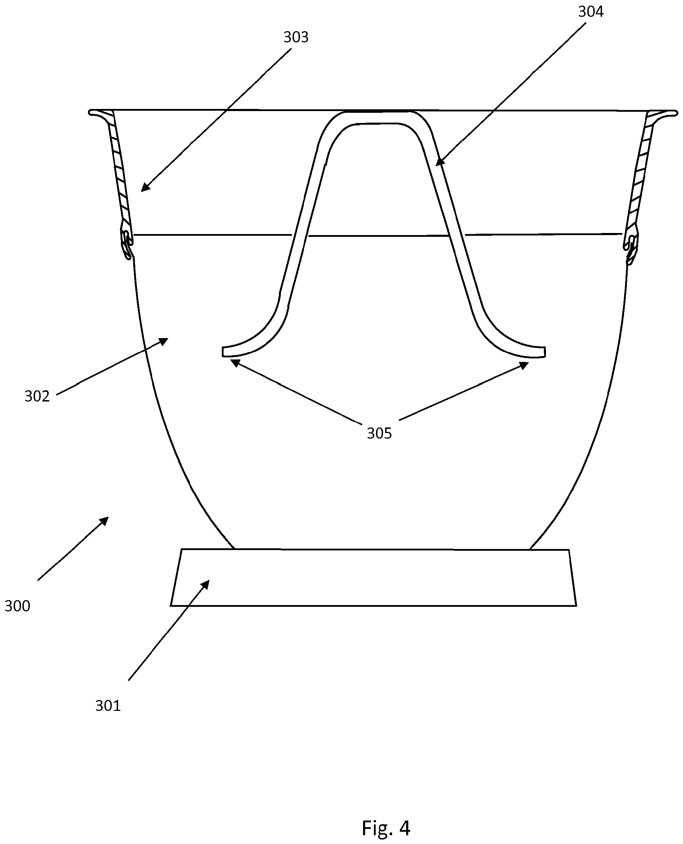

Figure 4 shows a third embodiment including a mixing bowl 300 comprising a base 301, lower section 302, upper section 303, and a handle 304 connected to the lower section by connections
305. This embodiment is identical to the second embodiment except that the handle 304 can be used to hold in the sides of the flexible upper section 303 and prevent them from deforming in the region of the handle 304 when carrying the bowl 300.

The connections 305 are preferably hinged connections, which allow the handle 304 to swing outwardly. The upper rim of the upper section 303 preferably is attachable to the handle (e.g., by using a hook-shaped rim such as the rim 204 discussed above). The handle 304 may thus be swung outwardly to pull the upper rim of the upper section 303 in the region of the handle 304 into a spout-shape.

The connections 305 preferably should be lockable (e.g., using a pivoting prop that rests against the outside of the bowl 300 when in a locked position) so as to hold the handle 304 in an outwardly- swung position, and unlockable so as to allow the handle 304 to return to an upright position under the resilient force of the upper section 303. The handles 304 should further preferably be spring- loaded (e.g., via one or more torsion springs wrapped around the connections 305 with one end biased against the handle and the other end biased against the bowl 300) so that when the connections 305 are unlocked the handle is resiliently returned to an upright position supporting the side of the upper section 303.

Alternatively, the connections 305 are welded connections that hold the handle 304 in an outwardly- protruding position where the top of the handle is roughly as high vertically above the base as the rim of the bowl. In this case the upper section 303 is manually stretched over the handle 304 to form a spout-shape, and then manually removed from the handle 304 to return it to its prior configuration.

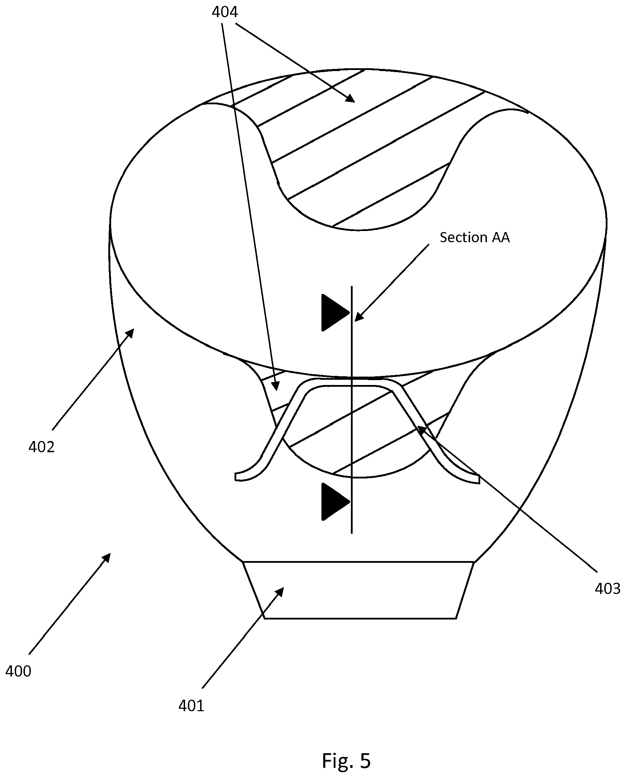

Figure 5 shows a fourth embodiment including a mixing bowl 400 comprising a base 401, bowl wall 402, handle 403, and deformable spout sections 405. The base 401 and bowl wall 402 are preferably formed from a rigid, metallic, induction-heatable material such as stainless steel, whilst the deformable spout sections 405 are formed from an elastically deformable material such a silicone.

The bowl wall 402 defines "V" or "U" shaped cut-outs in which the deformable spout sections 405 are located, preferably by being bonded to the bowl wall in the manner already discussed in relation to Figure 3, or by being removably attached via a zip-lock type arrangement or similar water-proof locking arrangement. The rigid structure of the bowl wall 402 acts to hold the deformable spout sections 405 taut so that they do not appreciably bulge outwardly when the bowl is filled.

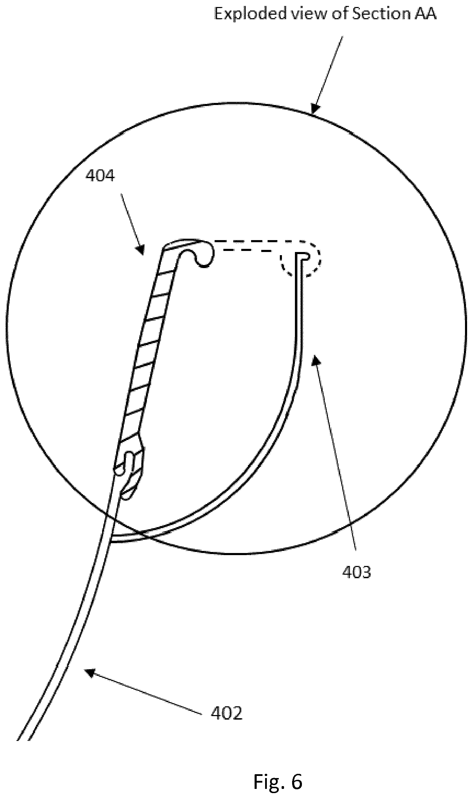

As shown in Figure 6, which shows a detail of a section through line AA in Figure 5, the deformable spout sections 405 are still sufficiently elastically deformable that they can be stretched over the neighbouring handle 403 to form a spout-shape. As shown by the dotted line in Figure 6, the deformable spout sections can be stretched so as to hook over the handle 403 so as to form a spout to enable easy pouring. Once un-hooked, the elastically deformable spout sections 405 resume their former shape.

The deformable spout sections 405 (and by extension any of the elastically-deformable elements described here) can also be modified by the addition of substantially vertical support elements such as ribs (not shown) so that they can be stretched outwardly without folding over, thus preventing the pressure of the contents of the bowl 400 from pushing the deformable spout sections 405 outwardly and downwardly resulting in spilling.

These vertical support elements are preferably integrally formed with the deformable spout section. Alternatively they can be vertically-oriented wire elements which the deformable spout sections are over-moulded onto.

It will be understood that the invention has been described above purely by way of example, and modifications of detail can be made within the scope of the invention.

Each feature disclosed in the description, and (where appropriate) the claims and drawings may be provided independently or in any appropriate combination, and is not limited to a single embodiment.

## Claims

1. A mixing bowl comprising a base, and a sidewall upstanding from the base, wherein the sidewall comprises a rigid side-wall section and an elastically-deformable side-wall section at least a portion of which is deformable to form a spout for pouring contents out of or into the bowl.

2. The mixing bowl of claim 1, wherein the rigid side-wall section defines at least one cutout in an upper edge, and the elastically-deformable side-wall section is located in the at least one cutout, the at least one cutout preferably being substantially "V" or "U" shaped.

3. The mixing bowl of claim 1 or 2, wherein the elastically-deformable side-wall section comprises an upper section of the side-wall upstanding from the rigid side-wall section.

4. The mixing bowl of any preceding claim , wherein the elastically-deformable side-wall section comprises a relatively hard section, and a relatively soft section, wherein the soft section is deformable to form the spout, and preferably wherein the hard section and the soft section are integrally formed, and wherein the soft section is preferably of lower Shore A hardness than the hard section, for example wherein the hard section has a hardness of Shore A hardness 40 or more, and the soft section has a hardness of Shore A hardness 20 or less.

5. The mixing bowl of any preceding claim further comprising at least one handle extending from the rigid side-wall section, preferably wherein the at least one handle is of sufficient length to reach the same vertical height above the base as the sidewall, and/or wherein the at least one handle is connected to the side wall by one or more hinged connections, the at least one handle being moveable from a first position abutting the sidewall to a second position protruding outwardly from the sidewall, and wherein the elastically-deformable side-wall section is deformable to attach to the at least one handle when it is in the second position to form the spout, wherein the at least one handle is preferably lockable in the second position, and wherein the hinged connections are preferably spring-loaded so as to bias the handle towards the first position.

6. The mixing bowl of any preceding claim, wherein the elastically deformable side-wall section further comprises a hook-shaped rim along at least a portion of an upper edge thereof, wherein the hook-shaped rim preferably has a hardness of Shore A 100 or more, and preferably wherein the mixing bowl further comprises a rigid frame which is preferably, of larger diameter than the hook-shaped rim where the hook shaped rim is an untensioned state, and the hook-shaped rim is removably attachable to the frame, preferably wherein the rigid frame is configured such that the elastically-deformable side-wall section forms the spout when the hook-shaped rim is attached to the rigid frame.

7. The mixing bowl of any preceding claim, wherein the base further comprises locking elements arranged for removably attaching the bowl to a stand mixer, kitchen machine, or other kitchen device.

8. The mixing bowl of claim 7, wherein the base and/or the rigid side-wall section further comprise heating elements for heating contents of the mixing bowl, the heating elements being arranged to derive electrical power from a kitchen device when the base is attached thereto, and/or, wherein the base and/or the rigid side-wall section further comprise at least one heat sensor for sensing the heat of contents of the mixing bowl, the sensor(s) being configured to derive electrical power from a kitchen device when the base is attached thereto, and to transmit data to the kitchen device.

9. The mixing bowl of any preceding claim, wherein the rigid side-wall section comprises a recess along an inner surface of the upper edge thereof, and the elastically-deformable side-wall section comprises a flange received in the recess such that the sections form a continuous inner surface of the bowl, and/or wherein the rigid side-wall section forms a lip protruding outwardly from the bowl along an upper edge to create a gap, and the elastically-deformable side-wall section is bonded onto the inner surface of the lip, wherein the gap is of substantially the same thickness as the elastically deformable sidewall bonded to the inner surface, and preferably wherein the elastically-deformable side-wall section is further bonded to an outer surface of the rigid side-wall section below the lip.

10. The mixing bowl of any preceding claim, wherein the elastically-deformable side-wall section is removably attached to the rigid side-wall section by a water-proof locking element, wherein the water-proof locking element is preferably a zip-lock.

11. The mixing bowl of any preceding claim, in which the elastically-deformable side-wall section further comprises one or more substantially upright strengthening elements, the one or more upright strengthening elements preferably being integral ribs or embedded wires.

12. The mixing bowl of any preceding claim, wherein the base and/or rigid side-wall comprises a metallic, induction-heatable material, preferably of stainless steel.

13. The mixing bowl of any preceding claim, wherein the elastically deformable side-wall section comprises silicone.

14. The mixing bowl of any preceding claim in which the base and rigid side-wall section are integrally formed.

15. A kitchen device comprising the mixing bowl of any preceding claim, wherein the kitchen device is preferably a stand mixer, and the bowl is preferably arranged to be removably attached to the stand mixer.
